# EUROPÄISCHE PATENTSCHRIFT

(11) **EP 1 897 727 B1**
(45) Veröffentlichungstag und Bekanntmachung des Hinweises auf die Patenterteilung: **11.06.2014**
(21) Anmeldenummer: 07015446.3
(22) Anmeldetag: 07.08.2007
(51) Int. Cl.: B60J 7/12

(54) **Verdeck mit einem Spannbügel für ein Cabriolet**
Soft top with a rear bow for a convertible
Capote dotée d'un arceau de tension pour un cabriolet

(30) Priorität: 08.09.2006 DE 102006042290
(43) Veröffentlichungstag der Anmeldung: 12.03.2008
(73) Patentinhaber: Dr. Ing. h.c. F. Porsche AG, 70435 Stuttgart (DE)
(72) Erfinder: Fröschle, Mathias, 73760 Ostfildern (DE); Liebhardt, Randolf, 71120 Grafenau (DE)

(56) Entgegenhaltungen:
- EP-A- 0 592 109
- DE-A1- 4 324 461
- DE-A1- 10 208 848
- DE-C1- 4 217 636
- FR-A- 485 245
- US-A- 1 558 184
- US-B1- 6 695 385

## Beschreibung

Bei der Erfindung wird ausgegangen von einem Verdeck mit einem Spannbügel für ein Cabriolet, gemäß Oberbegriff des Patentanspruchs 1, wie beispielsweise in der DE 42 17 636 beschrieben wird.

Aus der DE 600 12 114 T4 ist ein gattungsbildendes Verdeck bekannt. An einem mehrere Gestellteile aufweisenden Verdeckgestell ist ein Verdeckstoff in Lage gehalten, der heckseitig von einem Spannbügel gespannt gehalten wird, wenn das Verdeck in Schließstellung den Fahrgastraum überspannt. Zum Ablegen des Verdecks in einen Verdeckkasten muss zuvor der Spannbügel von einer den Verdeckkasten verschließenden Verdeckkastenabdeckung angehoben werden, damit diese aufgeklappt werden kann. In der Schließstellung des Verdecks hingegen liegt somit der Spannbügel auf der Verdeckkastenabdeckung in einer Spannstellung auf. In der Spannstellung wird er von einer Kniehebelanordnung auf die Verdeckkastenabdeckung gedrückt, wobei die Kniehebelanordnung in einer so genannten Über-Totpunktlage vorliegt. Zum Anheben des Spannbügels, damit die Verdeckkastenabdeckung geöffnet werden kann, ist ein an dem Verdeckgestell angreifender Antrieb vorgesehen.

Bei einem anderen Verdeck, das in der DE 102 01 871 A1 beschrieben ist, besitzt der Spannbügel als eigenen Antrieb einen Hydraulikzylinder. Allerdings ist auch hier eine Kniehebelanordnung vorgesehen, die zwischen dem Spannbügel und einem anderen Gestängeteil des Verdeckgestänges angeordnet ist.

Aufgabe der Erfindung ist es, ein Verdeck der eingangs genannten Art anzugeben, bei dem der Spannbügel optimiert in der Spannposition gehalten wird.

Gelöst wird diese Aufgabe mit einem Verdeck, das die in Anspruch 1. genannten Merkmale aufweist. Ausführungsbeispiele der Erfindung sind Gegenstand der abhängigen Ansprüche.

Die mit der Erfindung erzielten Vorteile sind darin zu sehen, dass auf die eingangs erläuterte Kniehebelanordnung verzichtet werden kann, deren Ansteuerung aus der Über-Totpunktlage heraus einigen Steuerungsaufwand an dem Verdeckgestell verursacht, auch dann, wenn der Spannbügel einen eigenen Antrieb aufweist. Die erfindungsgemäße Sperreinrichtung ersetzt die Kniehebelanordnung und ist in vielen verschiedenen Ausführungsbeispielen realisierbar, so dass sie auf unterschiedliche Verdeckgestellvarianten anwendbar ist.

Dadurch, dass die erfindungsgemäße Sperreinrichtung zwischen dem Spannbügel und einem anderen Gestellteil eingekoppelt ist und entweder in ihrer Länge veränderbar oder relativ gegenüber dem Gestellteil verschiebbar ist, sowie ferner die erfindungsgemäßen Sperrglieder aufweist, kann der Spannbügel durch Sperren der Sperreinrichtung in einer vorgegeben Längenerstreckung zwischen dem Spannbügel und dem Gestellteil in Lage, also in der Spannposition auf der Verdeckkastenabdeckung gehalten werden.

Bevorzugt ist nach einem in Anspruch 2 angegebenen Ausführungsbeispiel zum Entriegeln der Sperreinrichtung, bevor der Spannbügel angehoben werden soll, eines der Sperrglieder schwenkbar und kann so außer Eingriff mit dem anderen Sperrglied gebracht werden.

Ein besonders bevorzugtes erstes Ausführungsbeispiel der Sperreinrichtung gemäß Anspruch 3 zeichnet sich durch die Einfachheit der verwendeten Bauteile aus und kann daher einfach und kostengünstig realisiert werden.

Weiterhin wird besonders bevorzugt als erstes Sperrglied ein Verriegelungshaken gemäß Anspruch 4 vorgeschlagen, der schwenkbar an der Sperreinrichtung und insbesondere an dem Sperrlenker gelagert ist.

Zum Außereingriffbringen des ersten Sperrglieds von dem zweiten Sperrglied ist in einem bevorzugten Ausführungsbeispiel ein eigener Antrieb für das erste Sperrglied vorgesehen, wie in Anspruch 5 angeführt. Ausführungsbeispiele des Antriebs sind Gegenstand der Ansprüche 6 bis 9, wobei der Antrieb - gemäß einem weiteren Ausführungsbeispiel nach Anspruch 10 - lediglich zum Außereingriffbringen des ersten Sperrgliedes vorgesehen ist. Das Ineingriffbringen des ersten Sperrgliedes an dem zweiten Sperrglied kann selbsttätig erfolgen, beispielsweise durch eine Federkraft, die auf das erste Sperrglied wirkt. Lediglich zum Entriegeln der Sperreinrichtung wird der Antrieb für das erste Sperrglied also aktiviert.

Nach einem zweiten Ausführungsbeispiel entsprechend Anspruch 11 wird die Sperreinrichtung mit den zwei Sperrgliedern direkt an einer Kolben-Zylindereinheit angeordnet, so dass deren Kolbenstange in einer relativen Auszugsposition gegenüber dem Zylinder verriegelt werden kann. Die Kolben-Zylindereinheit bildet zugleich den eigenen Antrieb für den Spannbügel. Vorzugsweise ist ein solcher Hydraulikzylinder, allerdings ohne die Sperreinrichtung als Antrieb für den Spannbügel vorgesehen, wenn das erste Ausführungsbeispiel gemäß Anspruch 3 der Sperreinrichtung verwendet wird.

Die Erfindung wird nachfolgend anhand von Ausführungsbeispielen mit Bezug auf die Zeichnung näher erläutert: Es zeigen:
- Fig. 1: in Seitenansicht ein Verdeck mit einem Spannbügel in Spannposition,
- Fig. 2: ausschnittweise das Verdeck in Fig. 1, allerdings mit einem Spannbügel in angehobener Schwenkposition und

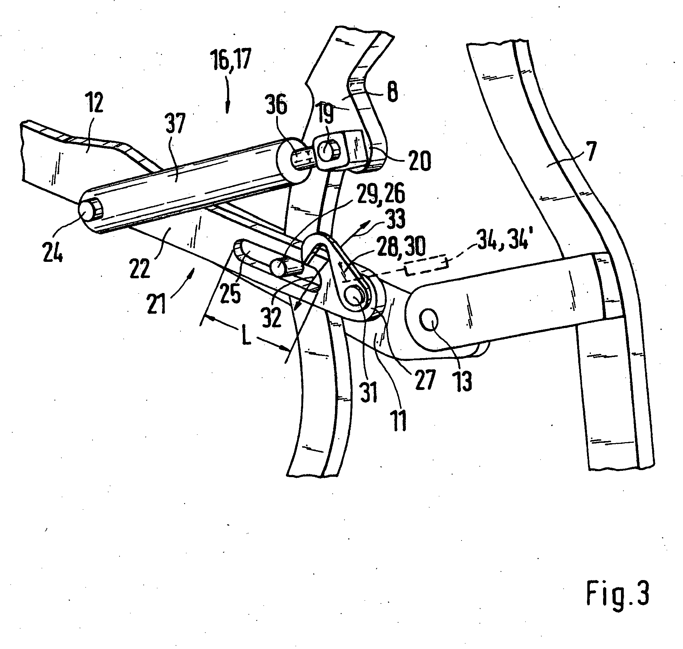

- Fig. 3: ausschnittweise einen Innenansicht auf das Verdeck mit einer Sperreinrichtung.

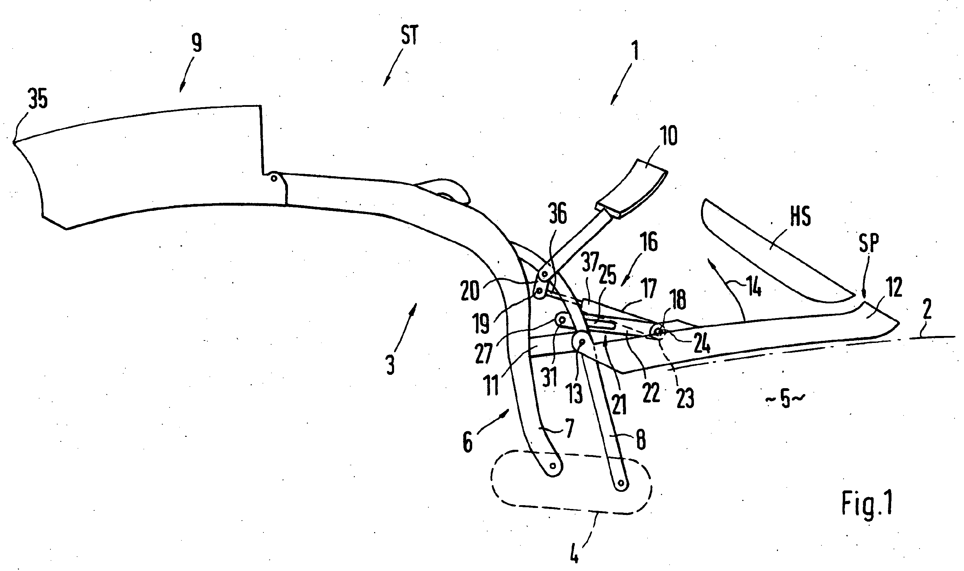

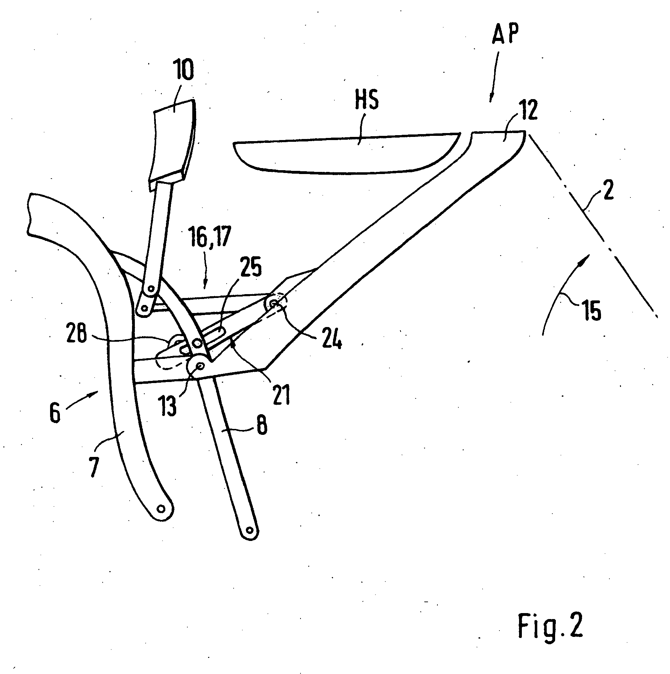

Die Fig. 1 zeigt von einem Verdeck 1 für ein auch als offenes Kraftfahrzeug bezeichnetes Cabriolet, von dem lediglich andeutungsweise eine Verdeckkastenabdeckung 2 dargestellt ist, ein Verdeckgestell 3, das über ein Verdecklager 4 an der Karosserie des Cabriolets bewegbar abstützt ist. In an sich bekannter Weise kann das Verdeck 1 aus der gezeigten Schließstellung ST in eine nicht dargestellte Ablagestellung in einem Verdeckkasten 5 abgelegt werden, der von der schwenkbar bewegbaren Verdeckkastenabdeckung 2 verschlossen (Fig. 1) oder freigegeben werden kann, wie in Fig. 2 gezeigt.

Das Verdeckgestell 3 umfasst mehrere Gestellteile, wie beispielsweise eine Hauptgelenkanordnung 6 mit beispielsweise zwei Lenkern 7 und 8, die ein vorderes Dachelement 9 gegenüber dem Verdecklager 4 abstützen, und beispielsweise zumindest einen so genannten Spriegel 10 oder weiteres Dachelement. Der auch als Dachlenker bezeichnete vordere Lenker 6 weist in seinem unteren, etwa aufrechten Abschnitt einen nach hinten gerichteten Fortsatz 11 auf, an dem ein heckseitiger Spannbügel 12 schwenkbar bei 13 gelagert ist. Der Spannbügel 13 kann um sein Lager 13 aus seiner auf der Verdeckkastenabdeckung 2 abgelegten Spannposition SP in eine in Fig. 2 gezeigte angehobene Schwenkposition AP in Pfeilrichtung 14 verlagert werden, so dass - wie vorstehend erwähnt - die Verdeckkastenabdeckung 2 in entgegengesetzter Schwenkrichtung 15 geöffnet und in umgekehrter Schwenkrichtung 15 geschlossen werden kann. Um den Spannbügel 12, der in der Schließstellung ST des Verdecks 1 und seiner Spannposition SP einen nicht gezeigten und von dem Verdeckgestell 3 getragenen Verdeckbezug in Lage gespannt hält, von der Spannposition SP in die Schwenkposition SP verlagern zu können, ist vorzugsweise ein separater Spannbügelantrieb 16 vorgesehen. Beim Verlagern des Spannbügels 12 verharren die übrigen Gestellteile, mit Ausnahme des Spriegels 10, der mitgenommen wird, in ihrer der Schließstellung ST zugeordneten Position. Der Spriegel 10 wird mitbewegt, damit eine über dem Spannbügel 12 angeordnete Heckscheibe HS des Verdecks 1 nicht gegen den Spriegel 10 fährt.

Für das Verdeck 1 kann ebenfalls ein separater Verdeckantrieb (nicht gezeigt) verwendet werden, der auf die Hauptgelenkanordnung 6 wirkt, um das Verdeck 1 von der Schließstellung ST in die Ablagestellung und umgekehrt zu verstellen. Im Übrigen ist die Anzahl der Gestellteile des Verdeckgestells 3 abhängig von der Ausführung des Verdecks 1 und kann dementsprechend variieren. Auch die Verdeckkastenabdeckung 2 kann einen eigenen Abdeckungsantrieb (nicht gezeigt) aufweisen.

Der Spannbügelantrieb 16 ist als Lineareinheit 17, insbesondere als Hydraulikzylinder, ausgeführt, und mit einem ersten Ende 18 schwenkbar an den Spannbügel 12 und mit einem zweiten Ende 19 an der Hauptgelenkanordnung 6, insbesondere an einem nach unten gerichteten Fortsatz 20 des hinteren auch als Hauptlenker bezeichneten Lenkers 8, schwenkbar angebunden. Zum Anheben des Spannbügels 12 verkürzt sich die Lineareinheit 17 entsprechend und der Spannbügel 12 schwenkt um sein Lager 13 in Pfeilrichtung 14, wodurch der Spannbügel von der Verdeckkastenabdeckung 2 abgehoben wird.

Um den Spannbügel 12 in seiner auf der Verdeckkastenabdeckung 2 aufgelegten Spannposition SP halten zu können, ist eine Sperreinrichtung 21 zwischen dem Spannbügel 12 und einem Gestellteil des Verdeckgestells 3, insbesondere der Hauptgelenkanordnung 6 und vorzugsweise dem Lenker 8, angeordnet, die nachfolgend in einem ersten Ausführungsbeispiel beschrieben ist.

Die Sperreinrichtung 21 umfasst einen Sperrlenker 22, der mit einem Ende 23 am Spannbügel 12, vorzugsweise an derselben Lagerstelle 24 wie die Lineareinheit 17, angelenkt ist. Der Sperrlenker 22 weist in seinem Verlauf eine vorzugsweise gerade verlaufende Führungsbahn 25 auf, die von einem Führungsglied 26, vorzugsweise Bolzen, durchgriffen ist. Das Führungsglied 26 ist an einem der Gestellteile des Verdeckgestells 3 angebracht, insbesondere an der Hauptgelenkanordnung 6 und vorzugsweise an dem Lenker 8. An seinem anderen Ende 27 und benachbart dem Ende der Führungsbahn 25 ist ein erstes Sperrglied 28 der Sperreinrichtung 21 schwenkbar beweglich gehalten, das mit dem Führungsglied 26 formschlüssig zum Verriegeln in Eingriff gebracht werden kann, wenn der Spannbügel 12 auf der Verdeckkastenabdeckung 2 aufliegt, also seine Spannposition SP einnimmt. Die Sperreinrichtung 21 hält somit den Spannbügel 12 verriegelt in der Spannposition SP. Das Führungsglied 26 bildet demnach ein zweites Sperrglied 29 der Sperreinrichtung 21. Die Führungsbahn 25 liegt also in Längserstreckungsrichtung des Sperrlenkers 22 parallel dazu und benachbart zu dem Ende 27 des Sperrlenkers 22. Die Länge L der Führungsbahn 25 ist so bemessen, dass der Spannbügel 12 in die Schwenkposition SP verlagert werden kann. Soll der Spannbügel 12 aus seiner Spannposition SP in seine Schwenkposition AP verlagert werden, wird das erste Sperrglied 28 außer Eingriff mit dem zweiten Sperrglied 29 gebracht und danach wird der Spannbügelantrieb 16 aktiviert.

Der Sperrlenker 22 der Sperreinrichtung 21 bildet demnach ein Element, das zwischen dem Spannbügel 12 und einem Gestellteil des Verdeckgestells 3, hier dem Lenker 8, angeordnet ist und das durch sein schwenkbare Befestigung am Spannbügel 12 und durch die Führungsbahn 25, in die das Führungsglied 26 eingreift, relativ gegenüber dem Gestellteil verschiebbar ist. Durch wahlweises Ineingriff- oder Außereingriffbringen des ersten Sperrelements 28 mit dem zweiten Sperrelement 29 wird somit der Spannbügel 12 in der Spannposition SP verriegelt oder für die Schwenkposition AP freigegeben.

Im gezeigten Ausführungsbeispiel ist das erste Sperrglied 28 als schwenkbarer Verriegelungshaken 30 ausgebildet, der auf einer Schwenkachse 31 gelagert ist. Die Schwenkachse 31 liegt zwischen dem Ende 27 des Sperrlenkers 22 und dem diesem Ende zugewandt liegende Ende der Führungsbahn 25. Zum Verriegeln der Sperreinrichtung 21 wird der Verriegelungshaken 30 in Pfeilrichtung 32 und zum Entriegeln in Pfeilrichtung 33 geschwenkt. Für das Schwenken des ersten Sperrglieds 28, also des Verrieglungshakens 30, ist dem ersten Sperrglied 28 ein hier lediglich schematisch angedeuteter Antrieb 34 zugeordnet. Dies kann ein eigens für das erste Sperrglied 28 vorgesehener Antrieb 34 sein, der beispielsweise als Lineareinheit, insbesondere Hydraulikzylinder oder elektromagnetischer Stellantrieb ausgeführt ist. Der Antrieb 34 für das erste Sperrglied 28 kann jedoch auch an ein bewegliches Element des Verdecks 1 gekoppelt sein; üblicherweise besitzt das Verdeck 1 einen so genannten Verdeckverschluss (nicht dargestellt), der das Verdeck 1 in Schließstellung ST an einem hier nicht gezeigten oberen Windlauf bzw. Windschutzscheibenrahmen verriegelt hält. Hierfür wird üblicherweise zumindest ein bewegbarer (manuell oder mit einem eigenen Antrieb) Verschlusshaken verwendet, die an der in Fig. 1 gezeigten Dachspitze 35 des vorderen Dachelements 9 angeordnet sind. Durch eine Koppelungseinrichtung 34' zwischen diesem Verschlusshaken und dem ersten Sperrglied 28 lässt sich dieses somit antriebsmäßig an den Verdeckverschluss ankoppeln und beim Betätigen des Verdeckverschlusses entriegeln, in dem es in der Pfeilrichtung 33 verschwenkt wird. Die Koppelungseinrichtung 34' kann beispielsweise ein Gestänge und/oder ein flexibler Zug, wie Bowdenzug, sein. Das Verriegeln des ersten Sperrgliedes 28 mit dem zweiten Sperrglied 29 kann selbsttätig erfolgen, also selbsteinrastend sein, wenn die Lineareinheit 17 den Spannbügel 12 auf den Verdeckkastendeckel 2, also in Spannstellung SP drückt. Lediglich zum Außereingriffbringen bzw. Entriegeln wird der Antrieb 34 bzw. 34' für das erste Sperrglied 28 verwendet.

Gemäß einem zweiten nicht ausführlich dargestellten Ausführungsbeispiel einer Sperreinrichtung kann ggf. auf den separaten Sperrlenker 22 mit Führungsbahn 25 und Verrieglungshaken 30 sowie das Führungsglied 26 verzichtet werden, wenn eine solche Sperreinrichtung in den Spannbügelantrieb 16 bzw. die Lineareinheit 17 integriert oder außen daran angebracht wird. Zur Realisierung dieser Sperreinrichtung kann demnach eine Kolbenstange 36 der als Kolben-Zylindereinheit 17' ausgebildeten Lineareinheit 17 mit einem Zylinder 37 der Lineareinheit 17 formschlüssig verriegelt werden, wenn der Spannbügel 12 in der Spannposition SP verriegelt werden soll. Durch dass Verriegeln der Kolbenstange 36 bezüglich des Zylinders 37 kann die Lineareinheit 17 ihre Länge nicht mehr verändern, so dass der Spannbügel 12 in der Spannposition SP auf der Verdeckkastenabdeckung 2 aufliegt. Bei der Sperreinrichtung an der Lineareinheit 17 handelt es sich mithin um ein in der Länge veränderbares Element; das in einer bestimmten, vorgebbaren Länge festgesetzt werden kann. Auf einfache Art und Weise kann die Sperreinrichtung direkt an der Lineareinheit 17 angeordnet werden; zwischen Kolbenstange 36 und Zylinder 37 können mithin in analoger Weise - wie zuvor für die Sperreinrichtung 21 beschrieben - ein erstes und zweites Sperrglied vorgesehen sein.

## Patentansprüche

1. Verdeck (1) für ein Cabriolet , mit einem mehrere bewegliche Gestellteile umfassenden Verdeckgestell (3) mit einem zumindest zum Ablegen des Verdecks (1) in einen Verdeckkasten (5) bewegbaren Spannbügel (12), der beim Ablegen des Verdecks (1) von einer Verdeckkastenabdeckung (2) abhebbar ist, um die Verdeckkastenabdeckung (2) für das Ablegen des Verdecks (1) öffnen zu können, und in einer Schließstellung (ST) des Verdecks (1) auf der Verdeckkastenabdeckung (2) in einer Spannposition (SP) ablegbar ist, mit einem zumindest den Spannbügel (12) bewegenden Antrieb (17), und mit einer Sperreinrichtung (21), die den Spannbügel (12) auf der Verdeckkastenabdeckung (2) in der Schließstellung (ST) des Verdecks (1) hält, **dadurch gekennzeichnet, dass** die Sperreinrichtung (21) als eine zwischen dem Spannbügel (12) und einem Gestellteil des Verdeckgestells (3) in ihrer Länge veränderbare oder eine relativ gegenüber dem Gestellteil verschiebbare Sperreinrichtung (21) ausgebildet ist, die den Spannbügel (12) in der Spannposition (SP) auf der Verdeckkastenabdeckung (2) über wenigstens ein erstes und ein zweites formschlüssiges Sperrglied (28, 29) verriegelt hält, wobei der Spannbügel (12) durch Sperren der Sperreinrichtung (21) in einer vorgegebenen Längenerstreckung zwischen dem Spannbügel (12) und dem Gestellteil in der Spannposition (SP) auf der Verdeckkastenabdeckung (2) gehalten wird.

2. Verdeck nach Anspruch 1, **dadurch gekennzeichnet, dass** das erste Sperrglied (28) schwenkbar bewegbar an der Sperreinrichtung (21) gelagert ist, um es mit dem zweite Sperrglied (29) wahlweise in Eingriff oder außer Eingriff zu bringen.

3. Verdeck nach Anspruch 1 oder 2, **dadurch gekennzeichnet, dass** die relativ gegenüber dem Gestellteil verschiebbare Sperreinrichtung (21) durch einen Sperrlenker (22) gebildet wird, der eine Führungsbahn (25) aufweist, dass an dem Gestellteil ein Führungsglied (26) angeordnet ist, das in die Führungsbahn (25) hineinragt und das zweite Sperrglied (29) bildet, und dass an dem Sperrlenker (22) das mit dem zweite Sperrglied (29) zusammenwirkende erste Sperrglied (28) angeordnet ist.

4. Verdeck nach Anspruch 2 oder 3, **dadurch gekennzeichnet, dass** das erste Sperrglied (28) ein an der Sperreinrichtung (21) schwenkbar angelenkter Verriegelungshaken (30) ist.

5. Verdeck nach einem der vorhergehenden Ansprüche, **dadurch gekennzeichnet, dass** das erste Sperrglied (28) einen eigenen Antrieb (34) aufweist.

6. Verdeck nach Anspruch 5, **dadurch gekennzeichnet, dass** der Antrieb (34) eine Lineareinheit ist.

7. Verdeck nach Anspruch 5 oder 6, **dadurch gekennzeichnet, dass** der Antrieb (34) ein Hydraulikzylinder ist.

8. Verdeck nach Anspruch 5 oder 6, **dadurch gekennzeichnet, dass** der Antrieb (34) ein elektromagnetisches Element ist.

9. Verdeck nach einem der vorhergehenden Ansprüche, **dadurch gekennzeichnet, dass** das erste Sperrglied (28) antriebsmäßig mit einem Verdeckverschluss gekoppelt ist.

10. Verdeck nach einem der vorhergehenden Ansprüche, **dadurch gekennzeichnet, dass** das erste Sperrglied (28) lediglich zum Außereingriffbringen von dem zweiten Sperrglied (29) über einen Antrieb (34, 34') verfügt.

11. Verdeck nach Anspruch 1, **dadurch gekennzeichnet, dass** die in ihrer Länge veränderbare Sperreinrichtung eine Kolben-Zylindereinheit (17') ist, die darin innerhalb oder daran außen die zwei Sperrglieder (28, 29) aufweist.

## Claims

1. Convertible top (1) for a convertible, with a convertible top frame (3) comprising a plurality of movable frame parts and having a clamping bow (12) which is movable at least for depositing the convertible top (1) into a convertible top compartment (5) and which is raiseable from a convertible top compartment cover (2) when depositing the convertible top (1) in order to be able to open the convertible top compartment cover (2) for depositing the convertible top (1) and, in a closed position (ST) of the convertible top (1), can be deposited on the convertible top compartment cover (2) in a clamping position (SP), with a drive (17) moving at least the clamping bow (12), and with a blocking device (21) which keeps the clamping bow (12) on the convertible top compartment cover (2) in the closed position (ST) of the convertible top (1), **characterized in that** the blocking device (21) is designed as a blocking device (21) which is changeable in its length between the clamping bow (12) and a frame part of the convertible top frame (3) or a blocking device (21) which is displaceable relative to the frame part and which keeps the clamping bow (12) locked in the clamping position (SP) on the convertible top compartment cover (2) via at least one first and one second interlocking blocking member (28, 29), wherein the clamping bow (12) is held by blocking of the blocking device (21) in a predetermined length extent between the clamping bow (12) and the frame part in the clamping position (SP) on the convertible top compartment cover (2).

2. Convertible top according to Claim 1, **characterized in that** the first blocking member (28) is mounted on the blocking device (21) so as to be movable pivotably in order either to be brought into engagement with or to be disengaged from the second blocking member (29).

3. Convertible top according to Claim 1 or 2, **characterized in that** the blocking device (21) which is displaceable relative to the frame part is formed by a blocking link (22) which has a guide track (25), **in that** a guide member (26) which projects into the guide track (25) and forms the second blocking member (29) is arranged on the frame part, and **in that** the first blocking member (28) which interacts with the second blocking member (29) is arranged on the blocking link (22).

4. Convertible top according to Claim 2 or 3, **characterized in that** the first blocking member (28) is a locking hook (30) which is coupled pivotably to the blocking device (21).

5. Convertible top according to one of the preceding claims, **characterized in that** the first blocking member (28) has a dedicated drive (34).

6. Convertible top according to Claim 5, **characterized in that** the drive (34) is a linear unit.

7. Convertible top according to Claim 5 or 6, **characterized in that** the drive (34) is a hydraulic cylinder.

8. Convertible top according to Claim 5 or 6, **characterized in that** the drive (34) is an electromagnetic element.

9. Convertible top according to one of the preceding claims, **characterized in that** the first blocking member (28) is coupled in terms of drive to a convertible top closure.

10. Convertible top according to one of the preceding claims, **characterized in that** the first blocking member (28) has a drive (34, 34') merely for the disengagement from the second blocking member (29).

11. Convertible top according to Claim 1, **characterized in that** the blocking device which is changeable in its length is a piston-cylinder unit (17') which has the two blocking members (28, 29) on the inside or on the outside thereof.

## Revendications

1. Capote (1) pour un cabriolet, avec une structure de capote (3) comprenant plusieurs parties de structure mobiles, avec un étrier de tension (12) déplaçable dans un compartiment de capote (5) au moins pour le rangement de la capote (1), lequel peut être soulevé lors du rangement de la capote (1) depuis un couvercle de compartiment de capote (2), afin de permettre l'ouverture du couvercle de compartiment de capote (2) pour ranger la capote (1), et peut être déposé dans une position tendue (SP) sur le couvercle de compartiment de capote (2) dans une position de fermeture (ST) de la capote (1), avec un entraînement (17) déplaçant au moins l'étrier de tension (12), et avec un dispositif de blocage (21) qui retient l'étrier de tension (12) sur le couvercle de compartiment de capote (2) dans la position de fermeture (ST) de la capote (1), **caractérisée en ce que** le dispositif de blocage (21) est réalisé sous forme de dispositif de blocage (21) de longueur variable entre l'étrier de tension (12) et une partie de structure de la structure de capote (3) ou déplaçable par rapport à la partie de structure, lequel dispositif de blocage maintient verrouillé l'étrier de tension (12) dans la position tendue (SP) sur le couvercle de compartiment de capote (2) par le biais d'au moins un premier et un deuxième organe de blocage à engagement positif (28, 29), l'étrier de tension (12) étant retenu sur le couvercle de compartiment de capote (2) dans la position tendue (SP) par blocage du dispositif de blocage (21) dans une étendue longitudinale prédéfinie entre l'étrier de tension (12) et la partie de structure.

2. Capote selon la revendication 1, **caractérisée en ce que** le premier organe de blocage (28) est monté de manière déplaçable par pivotement sur le dispositif de blocage (21), afin de l'amener de manière sélective en prise ou hors d'engagement avec le deuxième organe de blocage (29).

3. Capote selon la revendication 1 ou 2, **caractérisée en ce que** le dispositif de blocage (21) déplaçable par rapport à la partie de structure est formé par un bras oscillant de blocage (22) qui présente une piste de guidage (25), **en ce qu'**un organe de guidage (26) est disposé sur la partie de structure, lequel pénètre dans la piste de guidage (25) et forme le deuxième organe de blocage (29), et **en ce que** le premier organe de blocage (28) coopérant avec le deuxième organe de blocage (29) est disposé au niveau du bras oscillant de blocage (22).

4. Capote selon la revendication 2 ou 3, **caractérisée en ce que** le premier organe de blocage (28) est un crochet de verrouillage (30) articulé de manière pivotante au dispositif de blocage (21).

5. Capote selon l'une quelconque des revendications précédentes, **caractérisée en ce que** le premier organe de blocage (28) présente un entraînement propre (34).

6. Capote selon la revendication 5, **caractérisée en ce que** l'entraînement (34) est une unité linéaire.

7. Capote selon la revendication 5 ou 6, **caractérisée en ce que** l'entraînement (34) est un cylindre hydraulique.

8. Capote selon la revendication 5 ou 6, **caractérisée en ce que** l'entraînement (34) est un élément électromagnétique.

9. Capote selon l'une quelconque des revendications précédentes, **caractérisée en ce que** le premier organe de blocage (28) est accouplé par entraînement avec une fermeture de capote.

10. Capote selon l'une quelconque des revendications précédentes, **caractérisée en ce que** le premier organe de blocage (28) dispose d'un entraînement (34, 34') uniquement pour amener hors d'engagement le deuxième organe de blocage (29).

11. Capote selon la revendication 1, **caractérisée en ce que** le dispositif de blocage de longueur variable est une unité cylindre-piston (17'), qui présente à l'intérieur dans celle-ci ou à l'extérieur sur celle-ci les deux organes de blocage (28, 29).
